# EUROPEAN PATENT SPECIFICATION

(11) **EP 4 278 119 B1**
(45) Date of publication and mention of the grant of the patent: **29.01.2025**
(21) Application number: 22703053.3
(22) Date of filing: 14.01.2022
(51) Int. Cl.: F16L 11/08, F16L 11/112

(54) **CORRUGATED TUBING WITH EXTERNAL REINFORCEMENT**
WELLROHR MIT AUSSENVERSTÄRKUNG
TUBE ONDULÉ À RENFORT EXTERNE

(30) Priority: 15.01.2021 IT 202100000662
(43) Date of publication of application: 22.11.2023
(73) Proprietor: Industrie Ilpea S.p.A., 21020 Malgesso (IT)
(72) Inventor: CATALDO, Claudio Damiano, 21030 Cugliate Fabiasco (IT); CITTADINI, Paolo, 21020 Luvinate (IT)
(74) Representative: Pizzoli, Antonio Mario
(86) International application number: PCT/IB2022/050286
(87) International publication number: WO 2022/153227

(56) References cited:
- EP-A1- 0 748 972
- US-A- 3 994 673
- US-A- 4 159 027
- US-A- 5 024 419
- US-A- 5 349 988

## Description

### TECHNICAL FIELD OF THE INVENTION.

The present invention belongs to the field of transport of liquids and/or fluids. In particular, the present invention belongs to the field of tubing for transporting liquids or in general fluids. More in particular, the present invention relates to a tubing of the aforesaid type used to easily connect components of hydraulic and/or hydrodynamic systems, to allow the transport of said fluids, possibly under pressure, between said components.

In detail, the present invention relates to a tubing or pipe of the corrugated type, i.e., shaped to define a plurality of shoulders and dips arranged in an alternating manner, i.e., wherein between each pair of consecutive shoulders, there is a dip connecting said consecutive shoulders.

Even more in detail, the present invention relates to a corrugated type tubing comprising an external reinforcing spiral.

### BACKGROUND ART

The use of flexible tubings or pipes for the easy and reliable connection of components of hydraulic and/or hydrodynamic systems is well known and widespread in the prior art, to allow the transport of fluids, in particular but not exclusively under pressure, between said components.

In particular, the tubings according to the prior art are often made of polymeric material, thermoplastic materials, and vulcanized rubbers, according to the applications for which they are intended, and so that the tubings comply with various requirements including no leakage points (the tubing must be tight), resistance to the pressures applied by the transported fluid, resistance to the temperatures of the transported fluid and more generally of the working environment, resistance to the collapse of the tubing when bent to follow and define tight bending radii. Furthermore, for applications in the heating and plumbing sector, for example, the requirements for contact with drinking water often have to be added to the requirements mentioned above.

The need to meet the aforesaid requirements led to the development of several solutions which can be summarized as:
Smooth tubings made of vulcanized rubber with external textile or metal braid reinforcement, as in US 3994673 A;
smooth tubings made of soft thermoplastic materials with external reinforcement in textile or metallic braid or with reinforcement obtained by a double spiral of textile fibers;
corrugated tubings with textile or metal braid reinforcement, as in EP 0748972 A1. In particular, EP 0748972 A1 discloses a flexible hose comprising a composite polymeric core with a degradation-resistant liner and a thermoplastic elastomeric liner coating, the core preferably being surrounded by a protective braided sheath preferably covered by a polymeric coating layer which is preferably an extruded thermoplastic or melt processable elastomeric material. The degradation-resistant liner is optionally a polyolefin or fluorine-containing polyolefin and can have a convoluted inside surface.

The first group comprises tubings made of vulcanized rubber monolayer or multilayer, typically in EPDM (Ethylene-Propylene Diene Monomer), used in various fields, from the hydraulic sector (connections under the sink) to the automotive sector or the hydrodynamic sector.

The second group comprises, for example, soft PVC water inlet tubings for household appliances, such as washing machines and dishwashers, or even conventional "garden hoses".

The third group comprises the tubings of the heating and plumbing sector for applications in which tight bending radii without tubing collapse are required. The corrugated tubing can also be made of thermoplastic materials which meet even more stringent requirements in terms of suitability for contact with drinking water, thus overcoming the intrinsic limits of vulcanized rubber tubings.

In particular, the need to create tubings capable of withstanding the operating pressures and/or temperatures has led to the idea of applying a mechanical reinforcement consisting of a braid or a double spiral externally to the tubing and sometimes even in an "integrated" manner in the structure of the tubing.

The braiding technique (application/formation of the braid) consists in braiding on the tubing a series of metallic filaments (stainless steel, galvanized, etc) or textile filaments (polyester, nylon, Kevlar, etc) which compose a real fabric enclosed on the tubing itself, allowing the achievement of very high bursting pressures. This production method is the best performing from a mechanical point of view because the braid filaments are kept in position on the tubing by the structure of the braid itself, which is a real fabric made up of various threads. Tubings with this type of reinforcement can reach burst pressures comprised between 50 and 150 bar as a function of (depending on) the nature of the reinforcing fiber (metallic rather than textile) and the diameter of the tubing.

The double spiral technique, on the other hand, consists of depositing two spirals of n threads on the tubing at the same time (an example of configuration is with 16 threads) in an opposite direction - clockwise and counterclockwise - which together create a lattice which contributes to increasing the bursting resistance of the tubing. Since the double helix is not a fabric, i.e. a structure in which each thread is held in place by the other threads, these filaments must be "embedded" in the thermoplastic matrix which makes up the tubing, so that the filaments do not move as a result of bending of the tubing or as a result of internal pressures; indeed, if this were not the case, a weak point would be created in the tubing in which the reinforcing element is not present, and the tubing would fail prematurely. It is common to find on these tubings also filaments arranged longitudinally whose purpose is to counteract the elongation of the tubing when subjected to internal pressure. The reinforcing fibers used are mainly textile, typically polyester but sometimes also nylon, Kevlar, etc. The spiraling process consists of a first step during which the filaments are laid on the surface of the tubing to be reinforced, and a successive step of the cohesive coating of the tubing with a material compatible with the material of which the tubing is made, thus maintaining the reinforcement fibers in a fixed position.

Tubings with this type of reinforcement can withstand pressures of up to 20-50 bar as a function of the diameter of the tubing and the type of fiber used.

The main advantage offered by spiraling compared to braiding lies in the high production speed, which can reach up to 20-25 m/min.

The smooth, corrugated tubing of the known type briefly described above, while appreciable for the aforesaid advantages, nevertheless has disadvantages and/or drawbacks which the owner of the present patent application intends to overcome with the tubing according to the present invention.

A first drawback of the smooth tubings reinforced by means of a braid is given by the high cost generated by the number of filaments deposited on the tubing and especially by the manufacturing speed of the braid which is 1-1.5 m/min as a function of the diameter of the tubing to be coated.

Concerning corrugated tubings, the main drawback is the fact that they are not suitable to be subjected to the spiral process.

Indeed, the regular arrangement of the spiral fibers is optimal only when it is deposited on a smooth tubing on which to lay the filaments because as the thread is not self-supporting as would be in the case of braiding, maintaining the position of the reinforcing fiber on the tubing is problematic; in particular, even the pressure applied by the molten material during the step of over-extruding (external tubing coating) would be able to displace the fibers, where a poor positioning of the fibers results in a loss of mechanical strength.

It is thus the main object of the present invention to overcome or at least minimize the drawbacks outlined above and affecting the prior art.

In particular, it is a first object of the present invention to make available a corrugated type tubing reinforced with an external spiral.

It is a second, not secondary object of the present invention to make available a tubing of the aforesaid type which offers both the typical advantages of corrugated tubing and those provided by the external spiral.

A non-secondary purpose of the present invention is to provide a tubing which:
- can be curved or bent to define even very tight radii of curvature without the risk of collapse;
- guarantees adequate resistance to even very high internal pressures, thus reducing or avoiding the risk of bursting or leaks;
- is suitable to meet the most stringent requirements for suitability for contact with drinking water;
- can be manufactured at low costs and in any case competitive with the tubing according to the prior art.

### DESCRIPTION OF THE PRESENT INVENTION

The present invention is based on a novel concept of applying a reinforcing spiral to a corrugated core.

As explained below, the general concept described above requires the corrugated core to be made adapted to receive the spiraling by prior application of a smooth coating, in particular one which simulates a smooth tubing.

In view of the above, as well as of the problems and/or drawbacks encountered in the flexible tubing according to the prior art, the present invention provides a flexible tubing according to claim 1. Further embodiments of the tubing are defined by the dependent claims.

The flexible tubing, for hydraulic and/or hydrodynamic use, comprises a main flexible tubular body made of thermoplastic material which extends about a longitudinal extension axis, the sections of said main tubular body being substantially circular on planes perpendicular to said longitudinal extension axis, said main tubular body being of a corrugated type and thus conformed to define a first plurality of ridges or shoulders arranged in succession and a second plurality of dips or valleys arranged in succession to connect each of two consecutive ridges or shoulders; wherein said main tubular body is housed within a first coating made of thermoplastic elastomer, and wherein said tubing comprises a spiraling constituted by a plurality of filaments each spirally wound on said first coating made of thermoplastic elastomer.

According to the described embodiment, the diameter of each of the coils defined by said filaments is either equal to or greater than the maximum outer diameter of said main tubular body, wherein said filaments are thus arranged outside said valleys of said main tubular body.

According to the invention, said tubing comprises a second outer thermoplastic elastomer coating, wherein said filaments of said spiraling are embedded in said second outer thermoplastic elastomer coating.

According to a described embodiment, said spiraling comprises a first plurality of filaments each spirally wound on said first coating according to a first winding direction, and a second plurality of filaments each spirally wound on said first coating according to a second winding direction opposite to said first winding direction, wherein said filaments of said first plurality and second plurality are mutually arranged to define a lattice.

According to a described embodiment, said filaments of said spiraling are made of a textile material such as polyester, nylon, Kevlar, or similar material.

According to a described embodiment, said second outer coating is internally substantially cylindrical and of smooth tubular type, wherein the minimum inner diameter of said second outer coating is either equal to or greater than the maximum outer diameter of said main tubular body and said first coating, wherein said second outer coating does not follow the corrugation of said main tubular body and/or said first coating.

According to a described embodiment, said second outer coating is made by over-extrusion on said spiraling wound on said first coating in which said main tubular body is housed.

According to the described embodiment, said first external outer coating is substantially cylindrical inside and of smooth tubular type, wherein the minimum inner diameter of said first coating is either equal to or greater than the maximum outer diameter of said main tubular body, wherein said first outer coating does not follow the corrugation of said main tubular body.

According to a described embodiment, said first outer coating is made by over-extrusion on said main tubular body.

According to a described embodiment, said main tubular body is of a two-layer type, wherein said main tubular body comprises a main inner layer and an outer layer, and thus wherein said first coating comprises the outer layer of said main tubular body.

According to a described embodiment, said tubular body is made by simultaneous co-extrusion of said main inner layer and outer layer.

According to a described embodiment, said main tubular body is of the square wave and narrow valley type, wherein each of said shoulders is bounded externally by a substantially cylindrical surface.

According to a described embodiment, the longitudinal extent of said substantially cylindrical surface of each of said shoulders is either equal to or greater than twice the longitudinal pitch of said coils of said spiraling.

According to a described embodiment, the longitudinal extent of said substantially cylindrical surface of each of said shoulders is either equal to or greater than twice the maximum longitudinal distance between two consecutive shoulders. According to any one of the described embodiments, the thickness of said main tubular body is between 0.4 mm and 0.6 mm and/or an inner diameter is comprised between 6 mm and 24 mm.

According to a described embodiment, said first coating has an average thickness comprised between 0.2 mm and 0.3 mm.

According to a described embodiment, said second outer coating has a thickness comprised between 0.5 mm and 1 mm.

### BRIEF DESCRIPTION OF THE DRAWINGS

Hereafter, the present invention will be further clarified by means of the following detailed description of the possible embodiments depicted in the drawings, in which corresponding or equivalent features and/or component parts of the present invention are identified by the same reference numerals. It must be noted that the present invention is not limited to the embodiments described hereafter and depicted on the accompanying drawings; on the contrary, all the variants and/or changes to the embodiments described below and shown on the accompanying drawings which will appear obvious and immediate to a person skilled in the art are comprised in the scope of the present invention.

In the drawings:
Figures 1 and 2 show a perspective view in partial section and respectively a longitudinal section view of a tubing according to an embodiment;
Figure 3 is 4 show longitudinal section views of a tubing and a detail thereof according to an embodiment.

### DETAILED DESCRIPTION OF THE PRESENT INVENTION

The present invention is particularly applied in the field of dispensing and transmission systems of water or liquid in general, in particular for mutually connecting components, e.g. such as the components of household appliances, this being the reason for which the present invention is described hereafter with particular reference to its applications in the field of components for household appliances.

However, it is worth specifying that the possible applications of the present invention are not limited to those described hereafter. On the contrary, the present invention is conveniently applied in all cases in which it is necessary to hydraulically connect components of any type, e.g. hydrodynamic systems.

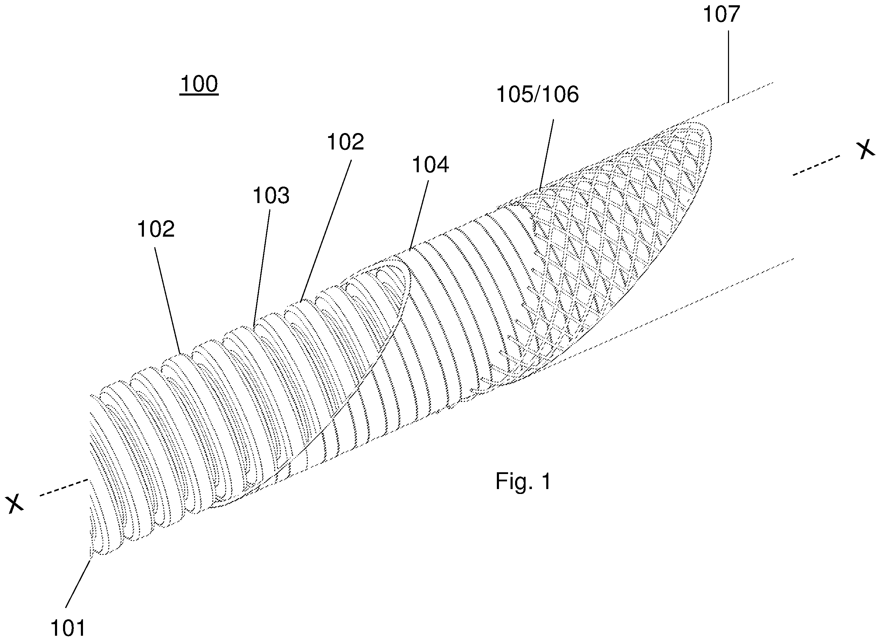

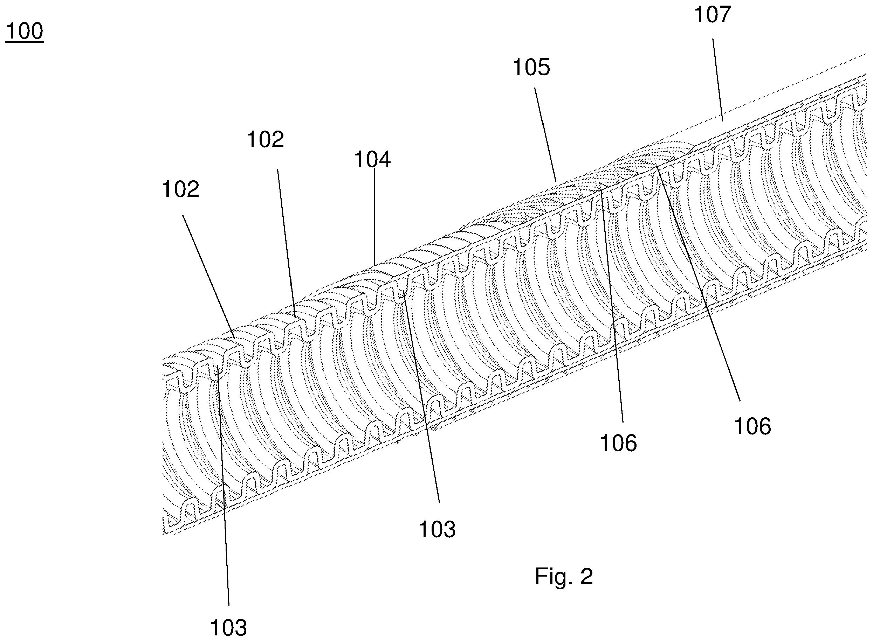

According to the embodiment as depicted in figures 1 and 2, the tubing shown therein, identified by reference numeral 100 and hereafter referred to simply as tubing or tube for the sake of briefness, comprises, from the inside out, a corrugated tubing (a main tubular body of the corrugated type) 101, a smooth coating 104 which surrounds and encloses within itself the main tubular body 101, a plurality of filaments 106 each wound spirally over the coating 104 to define a spiral 105, and finally an outer layer or coating 107 which surrounds and encloses within itself the spiral 105 and thereby also the inner coating 104 and the main tubular body of corrugated type 101.

The main body 101 is developed, as shown, along an extension direction X-X and, being of a corrugated type, comprises, as usual, a plurality of shoulders or protrusions (also called ridges) 102 arranged in succession along the direction X-X, and a plurality of valleys or dips 103 also arranged in succession along the direction X-X, wherein the shoulders 102 and the valleys 103 are mutually alternated along the direction X-X, and wherein, therefore, each valley 103 connects two consecutive shoulders 102 (and likewise each shoulder 102 connects two consecutive valleys 103). For the purposes of the present invention, in particular according to the embodiment shown in figures 1 and 2, the shoulders 102 and the valleys 103 may have any conformation (e.g., one conformation among those according to the prior art), wherein a detailed description thereof is omitted for the sake of brevity.

The materials may be those as a function of the applications of the tubing 100, wherein by way of non-limiting example, the main tubular body 101 may be made of thermoplastic material (e.g., with an average wall thickness of about 0.5 mm, and an inner diameter between 6 to 24 mm), the inner liner 104 may be made of thermoplastic elastomer compatible with the material of the main body 101 (e.g., with an average thickness of 0.2-0.3 mm), the filaments 106 may be either metallic or textile type (e.g., polyester but also nylon, Kevlar, and similar materials).

By way of non-limiting example, the tubing 100 shown in figures 1 and 2 may be constructed by the following procedure.

Forming on the main body 101 of the smooth inner liner 104 by means of the over-extrusion technique on the corrugated tubing 101;
the application by the technique of spiraling the reinforcing fibers or filaments 106, e.g., sixteen clockwise filaments 106, sixteen counterclockwise filaments 106, and possibly four/six longitudinal filaments 106, onto the coating 104;
formation of the outer coating or layer 107 by means of the over-extrusion technique to encompass the spiral 105 which will then be embedded in the outer coating 107.

According to alternative embodiments, the outer coating 107 can also be omitted. Thus, it is apparent that the purpose of the inner coating 104 is to make the main body 101 resemble a tubular body externally not corrugated but substantially smooth. Indeed, the inner coating 104, made in the form of a tubular sheath, allows the formation of the spiral 105 as in the case of a smooth tubing and thus to avoid the risk of the filaments 106 moving accidentally (already during the step of spiraling and/or during the over-extrusion of the outer coating 107).

As anticipated, the coating 104 may be constructed as a tubular sheath and thus either to leave the valleys 103 of the main body 101 substantially empty or to substantially fill said valleys 103.

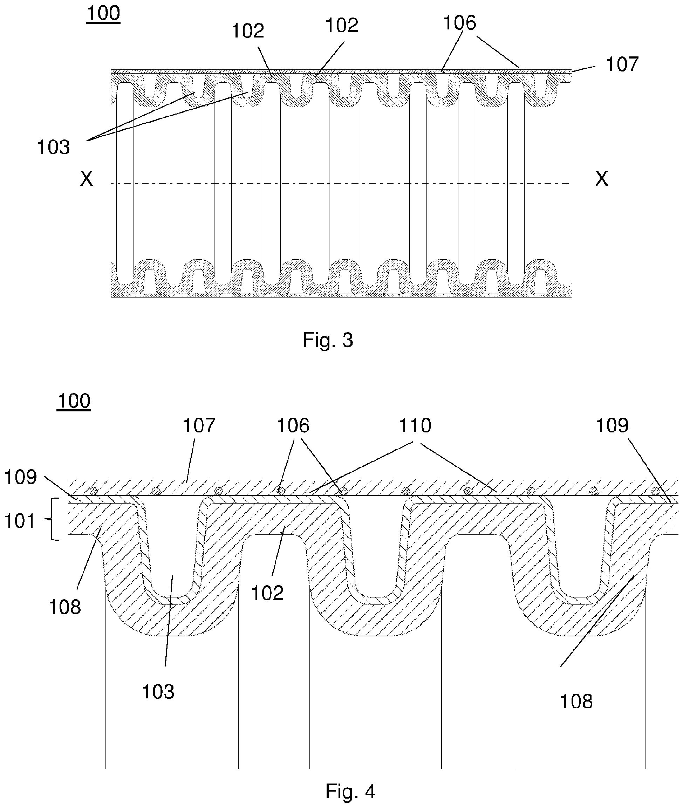

The embodiment depicted in figures 3 and 4 differs from that shown in figures 1 and 2 in that the main tubular body 101 is of the double layer type and thus comprises a main inner layer 108 (e.g., PP) and an outer layer 109 (e.g., TPE-S) made, for example (but not necessarily), by the simultaneous co-extrusion technique. According to this embodiment, the outer layer 109 replaces the inner coating 104 of the embodiment in figures 1 and 2 by performing substantially the same functions. Therefore, the outer layer 109 has the main function of allowing the formation of the spiraling by preventing the accidental displacement of the filaments 106, in particular by preventing the spirals from being deposited predominantly in the valleys 103 by virtue of at least in part but not solely to the high friction coefficient of the thermoplastic rubber surface of the layer 109.

Furthermore, for this purpose (and as shown), the corrugated conformation may be chosen so that the shoulders 102 define a preferred bearing surface for the filaments 106. In particular, the main tubular body 101 may be of the "square wave and narrow valley" type, wherein that is, each shoulder 102 is bounded externally by a substantially cylindrical surface 110 which serves as a support for the filaments 106. Eventually, the longitudinal extent (along the X-X axis) of the surfaces 110 may be chosen as a function of the pitch of the coils defined by the filaments 106, and that is, as a function of the longitudinal distance (along the X-X axis) between two successive coils, e.g. so that the longitudinal extent of each surface 110 is greater than or at least equal to twice the pitch of the coils of the spiral 105.

In this case, the method for making the tubing 100 may comprise:
applying reinforcing fibers or filaments 106 directly to the double-layer main body 101, and then to the outer layer 109, e.g., such as by spiraling sixteen filaments 106 clockwise, sixteen filaments 106 counterclockwise, and possibly four to six longitudinal filaments 106;
the formation of the coating or outer layer 107 by means of the over-extrusion technique.

It has thus demonstrated by means of the detailed description given above of the embodiments shown in the drawings that the present invention makes it possible to achieve the desired objects and to overcome or at least limit the drawbacks affecting the prior art.

In particular, the present invention makes available a tubing 100 which:
has an essentially "monolithic" thermoplastic structure by virtue of the chemical compatibility between the various components or layers which guarantee good weldability;
has properly spirally positioned reinforcing fibers 106 by virtue of to the presence of a substrate or coating 104 equivalent to a smooth tubing;
wherein the fibers 106 maintain their position on the tubing 100 (on the main body 101) as a result of welding between the inner coating 104 and the outer coating 107 both made of thermoplastic elastomer;
has unique advantages such as resistance to high bursting pressures by virtue of the reinforcement fibers 106 (20-50 bar), resistance to high temperatures by virtue of the reinforcement fibers 106, and an appropriate selection of the thermoplastic material of the corrugated tubing (e.g. 90°C for PP tubings and polyester fibers), ability to reach tight bending radii without collapsing by virtue of the main tubular body 101 of the corrugated type, up to 1.5-2 times the diameter of the tubing, suitability for contact with potable water also according to the most stringent regulations in this area (W270, NSF, etc).

Although the present invention is explained above by means of a detailed description of the embodiments thereof shown in the drawings the present invention is obviously not limited to the embodiments described above and shown on the drawings; on the contrary, all the variants and/or changes to the embodiments described and shown on the accompanying drawings are comprised in the object of the present invention and will be apparent and immediate to a person skilled in the art. For example, the corrugated main body 101 may be made of polyolefin resin, and the coating layers 104 and 107 of TPE-V or TPE-S.

The scope of protection of the present invention is thus defined by the claims.

## Claims

1. A flexible tubing (100) for hydraulic and/or hydrodynamic use, said tubing (100) comprising a main flexible tubular body (101) made of thermoplastic material which extends along an axis of longitudinal extension, the sections of said main tubular body (101) being substantially circular on planes perpendicular to said longitudinal extension axis, said main tubular body (101) being of a corrugated type and thus conformed to define a first plurality of ridges or shoulders (102) arranged in succession and a second plurality of dips or valleys (103) arranged in succession to connect each of two consecutive ridges or shoulders (102); wherein said main tubular body (101) is housed within a first coating (104) made of thermoplastic elastomer, wherein
said tubing comprises a spiraling (105) constituted by a plurality of non-braided filaments (106), each spirally wound on said first coating (104) made of thermoplastic elastomer,
wherein said tubing (100) comprises a second outer coating (107) made of thermoplastic elastomer, wherein
said filaments (106) of said spiraling (105) are embedded in said second outer coating (107) made of thermoplastic elastomer.

2. A tubing (100) according to claim 1, **characterized in that** the diameter of each of the coils defined by said filaments (106) is either equal to or greater than the maximum outer diameter of said main tubular body (101), and **thus in that** said filaments (106) are arranged outside said valleys (103) of said main tubular body (101).

3. A tubing (100) according to claim 1 or 2, **characterized in that** the outer surface of said first coating (104) is smooth or substantially smooth.

4. A tubing (100) according to any one of claims from 1 to 3, **characterized in that** said spiraling (105) comprises a first plurality of filaments (106) each spirally wound on said first coating (104) according to a first winding direction, and a second plurality of filaments (106) each spirally wound on said first coating (104) according to a second winding direction opposite to said first winding direction, **and in that** said filaments (106) of said first plurality and second plurality are mutually arranged to define a lattice.

5. A tubing (100) according to any one of claims from 1 to 4, **characterized in that** said filaments (106) of said spiraling (105) are made of textile material, such as polyester, nylon, Kevlar or similar material.

6. A tubing (100) according to any one of claims from 1 to 5, **characterized in that** said second outer coating (107) is internally substantially cylindrical and of smooth tubular type, **and thus in that** the minimum inner diameter of said second outer coating (107) is either equal to or greater than the maximum outer diameter of said main tubular body (101) and said first coating (104), **and thus in that** said second outer coating (107) does not follow the corrugation of said main tubular body (101) and/or said first coating (104).

7. A tubing (100) according to claim 6, **characterized in that** said second outer coating (107) is made by over-extrusion on said spiraling (105) wound on said first coating (104) in which said main tubular body (101) is housed.

8. A tubing (100) according to any one of claims from 1 to 7, **characterized in that** said first outer coating (104) is internally substantially cylindrical and of smooth tubular type, **and thus in that** the minimum inner diameter of said first coating (104) is either equal to or greater than the maximum outer diameter of said main tubular body (101), **and thus in that** said first outer coating (104) does not follow the corrugation of said main tubular body (101).

9. A tubing (100) according to claim 8, **characterized int that** said first coating (104) is made by over-extrusion on said main tubular body (101).

10. A tubing (100) according to any one of claims 1 to 7, **characterized in that** said main tubular body (101) is of a double-layer type, **thus in that** said main tubular body (101) comprises a main inner layer (108) and an outer layer (109), **and thus in that** said first coating (104) consists of said outer layer (109) of said main tubular body (101), **and in that** said main tubular body (101) is of the square wave and narrow valley type, **and thus in that** each of said shoulders (102) is externally delimited by a substantially cylindrical surface (110).

11. A tubing (100) according to claim 10, **characterized in that** said main tubular body (101) is made by simultaneous coextrusion of said main inner layer (108) and outer layer (109).

12. A tubing (100) according to claim 10 or 11, **characterized in that** the longitudinal extent of said substantially cylindrical surface (110) of each of said shoulders (102) is either equal to or greater than twice the longitudinal pitch of said coils of said spiraling (105).

13. A tubing (100) according to any one of claims 10 to 12, **characterized in that** the longitudinal extent of said substantially cylindrical surface (110) of each of said shoulders (102) is either equal to or greater than twice the maximum longitudinal distance between two consecutive shoulders (102).

14. A tubing (100) according to any one of claims 1 to 7, **characterized in that** said first coating (104) substantially fill said valleys (103) of the main tubular body (101).

15. A tubing (100) according to any one of claims 1 to 14, **characterized in that** the main tubular body (101), the first coating (104) and the second coating (107) are made of chemically compatible materials, so that the first coating (104) and the second coating (107) are welded together and form a cohesive coating of the main tubular body (101).

## Patentansprüche

1. Flexibles Rohr (100) zur hydraulischen und/oder hydrodynamischen Verwendung, wobei das Rohr (100) einen flexiblen rohrförmigen Hauptkörper (101) aus thermoplastischem Material umfasst, der sich entlang einer Achse der Längserstreckung erstreckt, wobei die Abschnitte des rohrförmigen Hauptkörpers (101) in Ebenen, die senkrecht zu der Längserstreckung liegen, im Wesentlichen kreisförmig sind, wobei der rohrförmige Hauptkörper (101) vom gewellten Typ ist und so angepasst ist, dass er eine erste Vielzahl von aufeinanderfolgend angeordneten Rippen oder Schultern (102) und eine zweite Vielzahl von aufeinanderfolgend angeordneten Vertiefungen oder Tälern (103) definiert, um jede von zwei aufeinanderfolgenden Rippen oder Schultern (102) zu verbinden;
wobei der rohrförmige Hauptkörper (101) in einer ersten Beschichtung (104) aus thermoplastischem Elastomer untergebracht ist,
wobei das Rohr eine Spirale (105) umfasst, die aus einer Vielzahl von nicht geflochtenen Filamenten (106) besteht, die jeweils spiralförmig auf die erste Beschichtung (104) aus thermoplastischem Elastomer gewickelt sind,
wobei das Rohr (100) eine zweite Außenbeschichtung (107) aus thermoplastischem Elastomer umfasst,
wobei die Filamente (106) der Spirale (105) in die zweite Außenbeschichtung (107) aus thermoplastischem Elastomer eingebettet sind.

2. Rohr (100) nach Anspruch 1, **dadurch gekennzeichnet, dass** der Durchmesser jeder der durch die Filamente (106) definierten Windungen entweder gleich oder größer als der maximale Außendurchmesser des rohrförmigen Hauptkörpers (101) ist, und somit dadurch, dass die Filamente (106) außerhalb der Täler (103) des rohrförmigen Hauptkörpers (101) angeordnet sind.

3. Rohr (100) nach Anspruch 1 oder 2, **dadurch gekennzeichnet, dass** die Außenfläche der ersten Beschichtung (104) glatt oder im Wesentlichen glatt ist.

4. Rohr (100) nach einem der Ansprüche 1 bis 3, **dadurch gekennzeichnet, dass** die Spirale (105) eine erste Vielzahl von Filamenten (106), die jeweils spiralförmig auf die erste Beschichtung (104) gemäß einer ersten Wickelrichtung gewickelt sind, und eine zweite Vielzahl von Filamenten (106) umfasst, die jeweils spiralförmig auf die erste Beschichtung (104) gemäß einer zweiten Wickelrichtung entgegengesetzt zu der ersten Wickelrichtung gewickelt sind, und dadurch, dass die Filamente (106) der ersten Vielzahl und der zweiten Vielzahl gegenseitig so angeordnet sind, dass sie ein Gitter definieren.

5. Rohr (100) nach einem der Ansprüche 1 bis 4, **dadurch gekennzeichnet, dass** die Filamente (106) der Spirale (105) aus textilem Material, wie Polyester, Nylon, Kevlar oder einem ähnlichen Material, hergestellt sind.

6. Rohr (100) nach einem der Ansprüche 1 bis 5, **dadurch gekennzeichnet, dass** die zweite Außenbeschichtung (107) innen im Wesentlichen zylindrisch und vom glatten rohrförmigen Typ ist, und somit dadurch, dass der minimale Innendurchmesser der zweiten Außenbeschichtung (107) entweder gleich oder größer als der maximale Außendurchmesser des rohrförmigen Hauptkörpers (101) und der ersten Beschichtung (104) ist, und somit dadurch, dass die zweite Außenbeschichtung (107) nicht der Wellung des rohrförmigen Hauptkörpers (101) und/oder der ersten Beschichtung (104) folgt.

7. Rohr (100) nach Anspruch 6, **dadurch gekennzeichnet, dass** die zweite Außenbeschichtung (107) durch Überextrusion auf die Spirale (105) hergestellt wird, die auf die erste Beschichtung (104) gewickelt ist, in der der rohrförmige Hauptkörper (101) untergebracht ist.

8. Rohr (100) nach einem der Ansprüche 1 bis 7, **dadurch gekennzeichnet, dass** die erste Außenbeschichtung (104) innen im Wesentlichen zylindrisch und vom glatten rohrförmigen Typ ist, und somit dadurch, dass der minimale Innendurchmesser der ersten Beschichtung (104) entweder gleich oder größer als der maximale Außendurchmesser des rohrförmigen Hauptkörpers (101) ist, und somit dadurch, dass die erste Außenbeschichtung (104) nicht der Wellung des rohrförmigen Hauptkörpers (101) folgt.

9. Rohr (100) nach Anspruch 8, **dadurch gekennzeichnet, dass** die erste Beschichtung (104) durch Überextrusion auf dem rohrförmigen Hauptkörper (101) hergestellt wird.

10. Rohr (100) nach einem der Ansprüche 1 bis 7, **dadurch gekennzeichnet, dass** der rohrförmige Hauptkörper (101) vom Doppelschichttyp ist, somit dadurch, dass der rohrförmige Hauptkörper (101) eine Hauptinnenschicht (108) und eine Außenschicht (109) umfasst, und somit dadurch, dass die erste Beschichtung (104) aus der Außenschicht (109) des rohrförmigen Hauptkörpers (101) besteht, und dadurch, dass der rohrförmige Hauptkörper (101) vom Typ mit quadratischer Welle und engem Tal ist, und somit dadurch, dass jede der Schultern (102) außen durch eine im Wesentlichen zylindrische Oberfläche (110) begrenzt ist.

11. Rohr (100) nach Anspruch 10, **dadurch gekennzeichnet, dass** der rohrförmige Hauptkörper (101) durch gleichzeitige Koextrusion der Hauptinnenschicht (108) und der Außenschicht (109) hergestellt ist.

12. Rohr (100) nach Anspruch 10 oder 11, **dadurch gekennzeichnet, dass** die Längserstreckung der im Wesentlichen zylindrischen Oberfläche (110) jeder der Schultern (102) entweder gleich oder größer als das Doppelte der Längsteilung der Windungen der Spirale (105) ist.

13. Rohr (100) nach einem der Ansprüche 10 bis 12, **dadurch gekennzeichnet, dass** die Längserstreckung der im Wesentlichen zylindrischen Oberfläche (110) jeder der Schultern (102) entweder gleich oder größer als das Doppelte des maximalen Längsabstands zwischen zwei aufeinanderfolgenden Schultern (102) ist.

14. Rohr (100) nach einem der Ansprüche 1 bis 7, **dadurch gekennzeichnet, dass** die erste Beschichtung (104) die Täler (103) des rohrförmigen Hauptkörpers (101) im Wesentlichen ausfüllt.

15. Rohr (100) nach einem der Ansprüche 1 bis 14, **dadurch gekennzeichnet, dass** der rohrförmige Hauptkörper (101), die erste Beschichtung (104) und die zweite Beschichtung (107) aus chemisch kompatiblen Materialien bestehen, so dass die erste Beschichtung (104) und die zweite Beschichtung (107) miteinander verschweißt sind und eine zusammenhängende Beschichtung des rohrförmigen Hauptkörpers (101) bilden.

## Revendications

1. Tube flexible (100) à usage hydraulique et/ou hydrodynamique, ledit tube (100) comprenant un corps tubulaire flexible principal (101) en matériau thermoplastique qui s'étend le long d'un axe d'extension longitudinale, les sections dudit corps tubulaire principal (101) étant sensiblement circulaires sur des plans perpendiculaires audit axe d'extension longitudinale, ledit corps tubulaire principal (101) étant de type ondulé et ainsi conformé pour définir une première pluralité de crêtes ou d'épaulements (102) disposés successivement et une deuxième pluralité de creux ou de vallées (103) disposés successivement pour relier chacune de deux crêtes ou épaulements consécutifs (102) ;
dans lequel ledit corps tubulaire principal (101) est logé à l'intérieur d'un premier revêtement (104) en élastomère thermoplastique,
dans lequel ledit tube comprend une spirale (105) constituée par une pluralité de filaments non tressés (106), chacun enroulé en spirale sur ledit premier revêtement (104) en élastomère thermoplastique,
dans lequel ledit tube (100) comprend un deuxième revêtement extérieur (107) en élastomère thermoplastique,
dans lequel lesdits filaments (106) de ladite spirale (105) sont intégrés dans ledit deuxième revêtement extérieur (107) en élastomère thermoplastique.

2. Tube (100) selon la revendication 1, **caractérisé en ce que** le diamètre de chacune des bobines définies par lesdits filaments (106) est soit égal soit supérieur au diamètre extérieur maximum dudit corps tubulaire principal (101), et donc **en ce que** lesdits filaments (106) sont disposés à l'extérieur desdites vallées (103) dudit corps tubulaire principal (101).

3. Tube (100) selon la revendication 1 ou 2, **caractérisé en ce que** la surface extérieure dudit premier revêtement (104) est lisse ou sensiblement lisse.

4. Tube (100) selon l'une quelconque des revendications 1 à 3, **caractérisé en ce que** ladite spirale (105) comprend une première pluralité de filaments (106) enroulés chacun en spirale sur ledit premier revêtement (104) selon une première direction d'enroulement, et une deuxième pluralité de filaments (106) enroulés chacun en spirale sur ledit premier revêtement (104) selon une deuxième direction d'enroulement opposée à ladite première direction d'enroulement, et **en ce que** lesdits filaments (106) de ladite première pluralité et de ladite deuxième pluralité sont mutuellement disposés pour définir un treillis.

5. Tube (100) selon l'une quelconque des revendications 1 à 4, **caractérisé en ce que** lesdits filaments (106) de ladite spirale (105) sont faits de matériau textile, tel que du polyester, du nylon, du Kevlar ou un matériau similaire.

6. Tube (100) selon l'une quelconque des revendications 1 à 5, **caractérisé en ce que** ledit deuxième revêtement extérieur (107) est intérieurement sensiblement cylindrique et de type tubulaire lisse, et donc **en ce que** le diamètre intérieur minimum dudit deuxième revêtement extérieur (107) est soit égal, soit supérieur au diamètre extérieur maximum dudit corps tubulaire principal (101) et dudit premier revêtement (104), et donc **en ce que** ledit deuxième revêtement extérieur (107) ne suit pas l'ondulation dudit corps tubulaire principal (101) et/ou dudit premier revêtement (104).

7. Tube (100) selon la revendication 6, **caractérisé en ce que** ledit deuxième revêtement extérieur (107) est réalisé par sur-extrusion sur ladite spirale (105) enroulée sur ledit premier revêtement (104) dans lequel ledit corps tubulaire principal (101) est logé.

8. Tube (100) selon l'une quelconque des revendications 1 à 7, **caractérisé en ce que** ledit premier revêtement extérieur (104) est intérieurement sensiblement cylindrique et de type tubulaire lisse, et donc **en ce que** le diamètre intérieur minimum dudit premier revêtement (104) est soit égal, soit supérieur au diamètre extérieur maximum dudit corps tubulaire principal (101), et donc **en ce que** ledit premier revêtement extérieur (104) ne suit pas l'ondulation dudit corps tubulaire principal (101)

9. Tube (100) selon la revendication 8, **caractérisé en ce que** ledit premier revêtement (104) est réalisé par sur-extrusion sur ledit corps tubulaire principal (101).

10. Tube (100) selon l'une quelconque des revendications 1 à 7, **caractérisé en ce que** ledit corps tubulaire principal (101) est d'un type à double couche, donc **en ce que** ledit corps tubulaire principal (101) comprend une couche intérieure principale (108) et une couche extérieure (109), et donc **en ce que** ledit premier revêtement (104) consiste en ladite couche extérieure (109) dudit corps tubulaire principal (101), et **en ce que** ledit corps tubulaire principal (101) est du type à onde carrée et à vallée étroite, et donc **en ce que** chacun desdits épaulements (102) est délimité extérieurement par une surface sensiblement cylindrique (110).

11. Tube (100) selon la revendication 10, **caractérisé en ce que** ledit corps tubulaire principal (101) est réalisé par coextrusion simultanée de lesdites couche intérieure principale (108) et couche extérieure (109).

12. Tube (100) selon la revendication 10 ou 11, **caractérisé en ce que** l'étendue longitudinale de ladite surface sensiblement cylindrique (110) de chacun desdits épaulements (102) est soit égale soit supérieure à deux fois le pas longitudinal desdites bobines de ladite spirale (105).

13. Tube (100) selon l'une quelconque des revendications 10 à 12, **caractérisé en ce que** l'étendue longitudinale de ladite surface sensiblement cylindrique (110) de chacun desdits épaulements (102) est soit égale soit supérieure à deux fois la distance longitudinale maximale entre deux épaulements consécutifs (102).

14. Tube (100) selon l'une quelconque des revendications 1 à 7, **caractérisé en ce que** ledit premier revêtement (104) remplit sensiblement lesdites vallées (103) du corps tubulaire principal (101).

15. Tube (100) selon l'une quelconque des revendications 1 à 14, **caractérisé en ce que** le corps tubulaire principal (101), le premier revêtement (104) et le deuxième revêtement (107) sont faits de matériaux chimiquement compatibles, de sorte que le premier revêtement (104) et le deuxième revêtement (107) sont soudés ensemble et forment un revêtement cohésif du corps tubulaire principal (101).
